# EUROPÄISCHE PATENTSCHRIFT

(11) **EP 0 908 698 B1**
(45) Veröffentlichungstag und Bekanntmachung des Hinweises auf die Patenterteilung: **28.11.2007**
(21) Anmeldenummer: 98117299.2
(22) Anmeldetag: 12.09.1998
(51) Int. Cl.: G01B 11/24, B21B 38/04

(54) **Verfahren zum Messen von Langprodukten**
Method for measuring longitudinal products
Procédé de mesure de produits longitudinaux

(30) Priorität: 16.09.1997 DE 19740614
(43) Veröffentlichungstag der Anmeldung: 14.04.1999
(73) Patentinhaber: Betriebsforschungsinstitut VDEh, Institut für angewandte Forschung GmbH, 40237 Düsseldorf (DE)
(72) Erfinder: Feldmeyer, Bernd, 47807 Krefeld (DE); Woeste, Werner, 40883 Ratingen (DE)
(74) Vertreter: König, Reimar

(56) Entgegenhaltungen:
- EP-A- 0 078 741
- EP-A- 0 481 496
- EP-A- 0 708 344
- US-A- 4 625 412
- PATENT ABSTRACTS OF JAPAN vol. 017, no. 609 (P-1640), 9. November 1993 (1993-11-09) & JP 05 187837 A (KUBOTA CORP), 27. Juli 1993 (1993-07-27)
- PATENT ABSTRACTS OF JAPAN vol. 009, no. 048 (P-338), 28. Februar 1985 (1985-02-28) & JP 59 188507 A (KAWASAKI SEITETSU KK), 25. Oktober 1984 (1984-10-25)
- PATENT ABSTRACTS OF JAPAN vol. 017, no. 095 (P-1493), 25. Februar 1993 (1993-02-25) & JP 04 291106 A (TOSHIBA CORP), 15. Oktober 1992 (1992-10-15)

## Beschreibung

Die Erfindung betrifft ein Verfahren zum Messen von Langprodukten in Walzwerken wie beispielsweise zum Erfassen der Geradheit, Dicke, Länge und Parallelität von Spezialprofilen.

Üblich ist es, die Geradheit von Langprodukten durch Sichtkontrolle unter Verwendung von technischen Hilfsmitteln zu erfassen. Die Meßabschnitte werden dabei an einer Bezugslinie - bei kurzen Meßabschnitten ein Lineal - ausgerichtet und die Abweichung von der Bezugsgeraden ebenfalls durch Sichtkontrolle oder mit Hilfe eines Meßkeils erfasst. Mehrere Meßabschnitte können durch überlappendes Versetzen des Lineals kombiniert werden. Durch Auftragen der Meßwerte in einem Diagramm ist die Krümmung des gesamten Profils erkennbar.

Dieses Verfahren erfordert einen erheblichen Zeitaufwand und wird daher in der Praxis nur stichprobenartig eingesetzt. Zur Vereinfachung des Verfahrens ist es bekannt, bei längeren Messobjekten als Bezugslinie einen Spanndraht oder eine Schnur zu verwenden. Dieser Technik sind jedoch durch mögliche Eigenbewegungen des Drahtes bzw. der Schnur Grenzen gesetzt. Bei einer Profillänge von über 15 m ist eine genaue Messung nicht mehr möglich.

Aus US 4,625,412 ist eine Vorrichtung zum Messen der Abnutzung des Profilquerschnitts einer Eisenbahnschiene bekannt, die einen Wagen enthält, der zur Fahrt entlang der Schiene und für Bewegungen senkrecht zur Fahrtrichtung ausgebildet ist. Meßmittel sind an dem Wagen befestigt und messen die Querbewegung des Wagens in Bezug zu der Eisenbahnschiene, woraus sich Erkenntnisse über die Abnutzung in dem Profilkopf der Schiene ableiten lassen. Das Messen mit einer Mehrzahl von Distanzsensoren erlaubt es, die Querbewegung des Wagens in Horizontal- und Vertikalkomponenten zu zerlegen um so die horizontale bzw. vertikale Abnutzung ermitteln zu können.

Aus JP 04-291 106 ist eine Vorrichtung zum Messen der Geradheit eines Langkörpers bekannt, bei dem Meßinstrumente in Längsrichtung des Materials gegen das Material bewegt werden. Ein parallel zur Bewegungsrichtung der Meßinstrumente ausgerichteter Laserstrahl wird von einer Fernsehkamera aufgenommen und in ein Bild umgewandelt. Mittels Bildverarbeitungsmethoden wird die Abweichung der Position der Meßinstrumente von der Laserstrahlachse ermittelt. Die Geradheit des Langkörpers über seine volle Länge wird durch Korrektur des detektierten Abweichungsbetrags der Meßinstrumente ermittelt.

Der Erfindung liegt das Problem zugrunde, ein Verfahren zum Messen von Langkörpern zu schaffen, das genaue Meßwerte liefert, einen geringen Aufwand bei der Messung erfordert und eine vollständige Automatisierung des Meßvorgangs ermöglicht.

Die Lösung des Problems basiert auf dem Gedanken, eine Vorrichtung, die einzelne Meßpunkte des Langkörpers erfasst, relativ zum Langkörper zu verfahren und eine Aussage über den gesamten Langkörper durch Kombination der einzelnen Meßwerte zu erhalten. Zur Kalibrierung des Meßsystems ist ein Laser vorgesehen, dessen Laserstrahl längs der Fahrbahn des Meßkopfes verläuft.

Das Problem wird gelöst durch ein Verfahren gemäß Anspruch 1, bei dem die Kalibrierung des Meßsystems an einem Laserstrahl erfolgt, der längs der Fahrbahn des Meßkopfes verläuft und die einzelnen Meßpunkte über in einem Meßkopf befindliche Sensoren erfasst werden, wobei der Meßkopf mit dem Sensor bei der Messung relativ zum Langkörper bewegt wird und die vom Sensor erfassten Daten an einen Rechner übermittelt und der daraus die geometrischen Eigenschaften des Langkörpers errechnet oder rechnerisch in Relation zu einer Bezugsgröße gesetzt werden um Sollabweichungen festzustellen.

Auf diese Weise lässt sich eine hochgenaue Erfassung der Geradheit, Dicke und Parallelität eines Langkörpers erreichen, die für eine lückenlose automatische Datenerfassung in der Fertigstraße geeignet ist. Die erfindungsgemäße Vorrichtung erleichtert insbesondere die bisher schwierige Messung unterschiedlicher bzw. ständig wechselnder Langkörper, wie dies bei Profilformen der Fall ist und erlaubt eine individuelle Anpassung an die meßtechnischen Wünsche des Benutzers sowie eine automatische Messung von in der Produktionsstraße befindlichen Profilen ohne Unterbrechung oder Verlangsamung des Produktionsbetriebs.

Das Problem wird ferner vorzugsweise gelöst durch ein erfindungsgemäßes Verfahren, bei dem die einzelnen Meßpunkte über in dem Meßkopf befindliche Sensoren erfasst werden, der Meßkopf mit dem Sensor bei der Messung relativ zum Längskörper bewegt wird und die vom Sensor erfassten Daten an einen Rechner übermittelt und der daraus die geometrischen Eigenschaften des Langkörpers errechnet oder rechnerisch in Relation zu einer Bezugsgröße gesetzt werden, um Sollabweichungen festzustellen, dadurch gekennzeichnet, daß der Langkörper (3) dadurch entspannt wird, daß er in mindestens einem Punkt angehoben wird, zentriert in die gewünschte Position bewegt wird. Dadurch wird das Problem der die Positionierung des Langkörpers im Wege stehenden Reibung, die sich aus der auf Rollen aufliegenden Fläche des Langkörpers ergibt, umgangen.

Der Meßkopf besteht vorzugsweise aus einer Mehrplattenkonstruktion. Dadurch erhöht sich dessen Steifigkeit und damit die Reproduzierbarkeit der Messung.

Vorzugsweise ist ein Teil des Meßkopfes in der Vertikalen verfahrbar. Hierfür kann eine der Platten als Trägerplatte dienen, während eine zweite Platte, die Meßsensoren trägt und vertikal in unterschiedlichen Höhen positionierbar ist. Mit Hilfe der vertikal positionierbaren Sensorplatten lässt sich die Messung in unterschiedlichen Höhen durchführen.

Als Sensoren können optische Triangulationssensoren eingesetzt werden. Diese können als Lichtschnittsensoren ausgebildet sein, die eine Lichtlinie auf die Meßgutoberfläche projizieren, die von einer in einem festen Winkel angeordneten CCD-Kamera (Charge-coupled-device Kamera) erfasst wird. Alternativ ist auch der Einsatz höher auflösender Flächenkameras oder digitaler Flächen- oder Zeilenkameras möglich. Aus dem abgebildeten Lichtschnitt lassen sich Abstands- bzw. Geometriewerte errechnen.

Die Sensoren können auch als Abstandssensoren ausgebildet sein. Besonders vorteilhaft ist es, wenn zwei gegensinnige Abstandssensoren in der Horizontalen angeordnet sind. Diese können zusammen mit einem vertikal messenden Lichtschnittsensor eingesetzt werden.

So läßt sich eine Messung in horizontaler und vertikaler Richtung mit dem erfindungsgemäßen System durchführen. Die Sensoren können horizontal verfahrbar sein. Die Sensoren können längs entlang ihrer Meßlinie verfahrbar sein.

Darüber hinaus kann mit Hilfe einer in der deutschen Offenlegungsschrift 42 29 313 beschriebenen Anordnung auch eine Rauheitsmessung der Oberfläche des Langkörpers durchgeführt werden. Ein Systemrechner dient der Steuerung der Anlage und der Erfassung bzw. Errechnung der Meßwerte.

Das Verfahren kann in den Prozeßablauf der Profilstraße integriert werden. Vorzugsweise wird es nicht in, sondern an der Produktionslinie angewendet. Dadurch lässt sich das erfindungsgemäße Verfahren einer bestehenden Produktionslinie ohne weiteres hinzufügen.

Im folgenden wird die Erfindung anhand eines in der Zeichnung dargestellten Ausführungsbeispiels des näheren erläutert. In der Zeichnung zeigen:

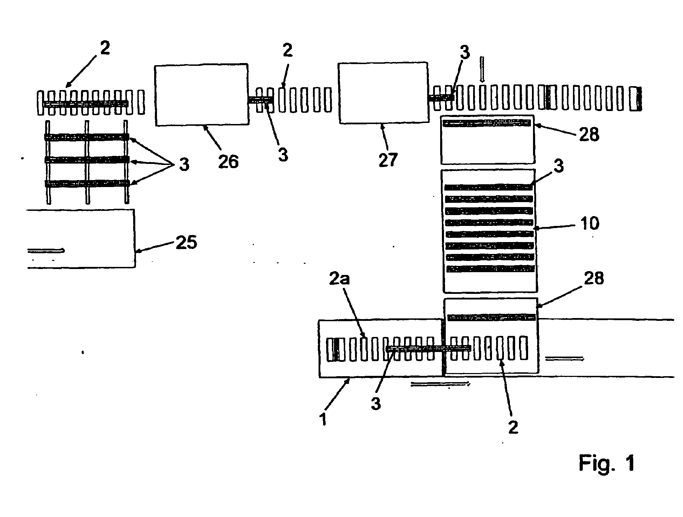

- Fig. 1:: eine Draufsicht auf die erfindungsgemäße Vorrichtung zum Messen von Langkörpers und ihre Position in der Produktionsstraße:

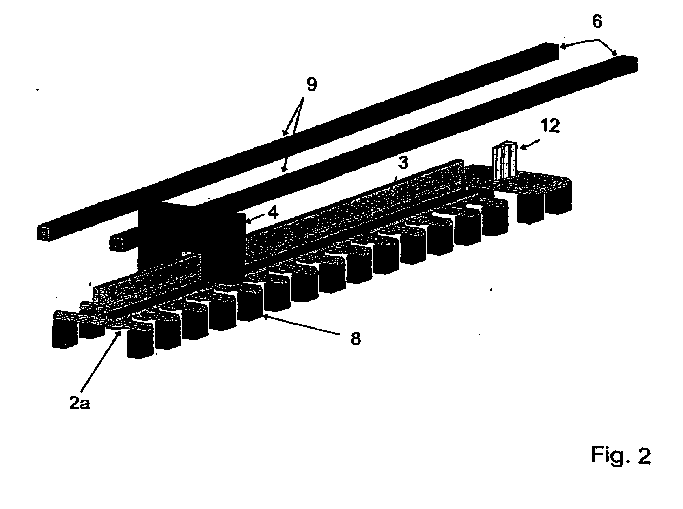

- Fig. 2:: eine perspektivische Ansicht der erfindungsgemäßen Meßvorrichtung;

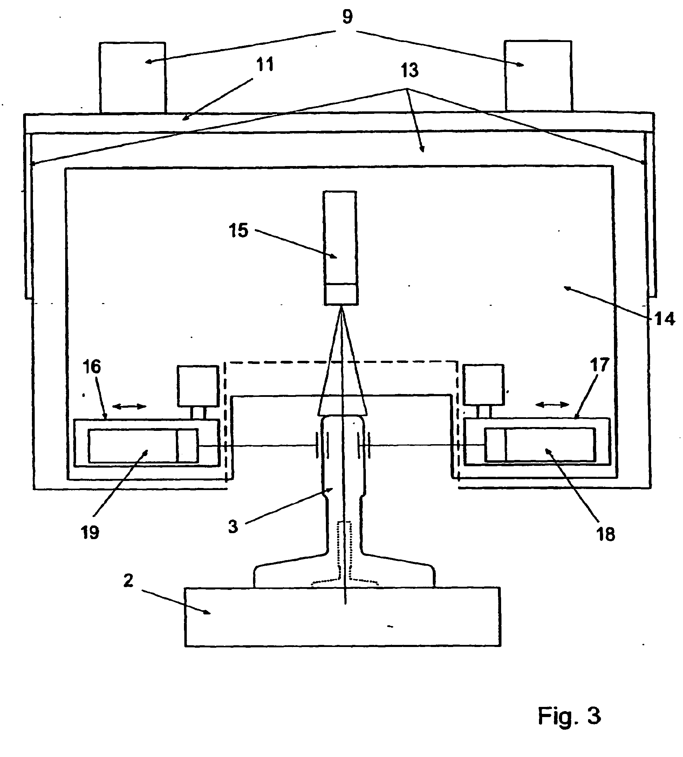

- Fig. 3:: eine schematische Schnittzeichnung durch den Meßkopf mit Meßprofil.

Das Gesamtsystem besteht aus einem Meßplatz 1 mit einem Rollgang 2a für Meßprofile 3, Präzisionsfahrbahnen 6, einem Meßkopf 4 und einem Steuerungssystem.

Das Steuerungssystem ist neben dem Zentralrechner mit Subsystemen mit speicherprogrammierbarer Steuerung (SPS) für die Fahrbahnsteuerung und für die Positioniereinheider optischen Sensoren 15,18,19 sowie mit der üblichen DV-Peripherie verbunden. Durch die SPS-Subsysteme wird der Systemrechner für die zeitkritische Meßwerterfassung entlastet. Zur weiteren Entlastung des Systemrechners können Bilderfassungsplatinen mit digitalem Signalprozessor verwendet werden.

Der Meßplatz 1 ist bezüglich der Prozeßstraße hinter einem Speicher 10 für die Meßprofile 3 angeordnet. Der Meßplatz 1 beinhaltet eine Präzisionsfahrbahn 6, die über an Trägern befestigten Verbindungsplatten präzise zum Rollgang 2 ausgerichtet werden kann. Der Rollgang 2a ist auf unteren Trägern 8 gelagert. Die unteren Träger 8 weisen eine hydraulische Zentrier- und Hebevorrichtung auf. Die Präzisionsfahrbahn 6 besteht aus zwei Präzisionsfahrprofilen 9 mit innenliegendem Zahnriemenantrieb. Auf jedem Profil wird ein Fahrschlitten geführt. Beide Schlitten sind über eine Platte 11 miteinander verbunden und werden von einem Motor über eine gemeinsame Welle angetrieben. Dies gewährleistet eine versatzfreie Bewegung des Meßkopfes 4.

Der Meßkopf 4 besteht aus einem C-Bügel aus formstabilen Aluminiumplatten. Zur Erhöhung der Steifigkeit findet als Trägerplatte 13 eine Mehrplattenkonstruktion Verwendung. An der Trägerplatte 13 ist eine positionierbare Sensorplatte 14 angeordnet.

Ein Lichtschnittsensor 15 dient der vertikalen Geradheitsmessung. Auf der Sensorplatte 14 sind ferner zwei Positionierschlitten 16,17 mit optischen Abstandssensoren 18,19 für die horizontale Geradheitsmessung bzw. Dickenmessung angeordnet. Die Sensorplatte 14 ist auf der Trägerplatte 13 verfahrbar. Dadurch ist eine Geradheitsmessung in unterschiedlichen Höhen möglich, was bei komplexen Meßprofilen 3 die Messung verschiedener Profilsegmente erlaubt. Die Vertikalpositionierung der Sensorplatte 14 erfolgt mit Hilfe eines Schrittmotors. Durch eine Haltebremse kann die Sensorplatte 14 auch in stromlosem Zustand in der vorgewählten Position gehalten werden. An der Sensorplatte 14 befindet sich eine Lichtschranke, die eine Kollision der Meßeinrichtung mit dem Meßprofil vermeidet.

Mit Hilfe der Abstandssensoren 18,19 ist neben der Geradheitsmessung auch eine Dickenmessung möglich. Die horizontale Positionierbarkeit der optischen Sensoren 18,19 läßt die Verwendung hochmessgenauer Sensoren mit kleinen Meßbereichen zu.

Sowohl der Lichtschnittsensor 15 als auch die optischen Abstandssensoren 18,19 arbeiten nach dem Triangulationsprinzip. Dabei wird zwischen der Beleuchtungs- und der Beobachtungsrichtung ein Winkel aufgespannt. Das von der Objektoberfläche rückgestreute Licht fällt auf eine positionsempfindliche Zeile des Abstandssensors 18,19 oder eine positionsempfindliche Fläche des Lichtschnittsensors 15. Aus den geometrischen Werten lassen sich dann die Abstände errechnen.

Als Lichtquelle für den Lichtschnittmeßkopf wird eine Laserdiode mit Rasterlinse eingesetzt. Beim Lichtschnittsensor 15 findet als Detektor eine kurzzeitbelichtete CCD-Kamera Verwendung.

Optische Abstandssensoren 18,19 werden als Horizontalsensoren eingesetzt. Die horizontale Einbaulage der Abstandssensoren 18,19 hat den Vorteil einer geringen Rauschamplitude bei höherer Rauschfrequenz. Dies ist darauf zurückzuführen, daß der Laserfleck elliptisch ist, wobei dessen Längsachse quer zur CCD-Zeile liegt und die Profiloberflächen der Meßprofile 3 in Längsrichtung geschliffen sind.

Trifft der Laserstrahl bei vertikal angeordnetem Sensor auf die längsgeschliffenen Meßprofile 3, so liegt die Längsachse der Lichtellipse näherungsweise parallel zu den Schleifriefen. Bei einer Bewegung wandert der Lichtfleck auf den Schleifriefen auf und ab, was zu großen Wertschwankungen auf der CCD-Zeile führt. Bei horizontal angeordnetem Sensor überstreicht die Lichtfleckellipse mit ihrer Längsachse mehrere Schleifriefen und bildet dabei einen optischen Mittelwert, was die Rauschamplitude verringert.

Mit dem Lichtschnittsensor 15 kann neben der Geradheitsmessung in der Vertikalachse die Horizontallage des Meßprofils 3 überwacht werden. Ferner läßt sich der Lichtschnittsensor 15 auch zur Kalibrierung der Präzisionsfahrbahn 6 einsetzen.

Die Dickenkalibrierung der Sensoren 18,19 erfolgt mit Hilfe eines Kalibrierstücks 12 bekannter Dicke. Aus dem Vergleich der gemessenen Dickenunterschiede des Kalibrierstücks 12 mit dessen tatsächlichen Dickenverhältnissen lassen sich Korrekturwerte für den ermittelten Meßwert bestimmen. Während der Kalibrierung wird der Meßkopf 4 verfahren, um Meßfehler aufgrund positionsabhängiger Streueffekte auszuschließen.

Mit Hilfe eines Laserstrahls, der längs der Fahrbahn des Meßkopfes verläuft und der vom Lichtschnittsensor während einer Kalibrierfahrt erfaßt wird, kann die Meßeinrichtung bezüglich ihrer Lage relativ zum Rollgang kalibrieren. Des weiteren können im Wege einer Leerfahrt auch Ungenauigkeiten des Rollgangs erfaßt werden.

Um den Langkörper dann in die gewünschte Position zu bringen, wird dieser vorzugsweise an einem oder zwei Punkten angehoben, an diesen Punkten zentriert und wieder abgesenkt. Dadurch wird das Problem der der Positionierung des Langkörpers im Wege stehenden Reibung, die sich aus der auf den Rollen aufliegenden Fläche des Langkörpers ergibt, umgangen.

Nachdem das Meßprofil 3 die Richtmaschine 25, die Fräsmaschine 26 und die Schleifmaschine 27 durchlaufen hat, wird es über die Hebeanlagen 28 dem Rollgang 2 des Meßplatzes 1 zugeführt.

Bei der Messung wird das Meßprofil 3 über den Rollgang 2 zum Meßplatz 1 geführt. Nachdem das Meßprofil 3 seine Endposition erreicht hat und der Meßkopf 4 kalibriert ist, kann eine Meßfahrt durchgeführt werden. Die durch den Meßkopf 4 ermittelten Daten werden an den Systemrechner übermittelt und können dort ausgewertet und archiviert werden. Abweichungen von vorgegebenen Toleranzwerten werden am Bildschirm und über ein Ampelwarnsystem signalisiert. Über den Systemrechner erfolgt auch die Initiierung Meßfahrten in Verbindung mit dem SPS-Subsystem. Durch die Verwendung von Subsystemen, die die Meßfahrt nach der Initiierung steuern, ist der Systemrechner nach Initiierung frei für die lückenlose Erfassung der Meßwerte. Dabei werden die durch die optischen Sensoren 18,19 ermittelten Werte direkt eingelesen, während die vom Lichtschnittsensor 15 ermittelten Werte zunächst durch eine gesonderte Bildverarbeitungsplatine ausgewertet werden. Durch Anpassung des Suchbereichs an das jeweilige Profil und der damit verbundenen Verringerung der Rechenzeit der Bildverarbeitungsplatine müssen schließlich nur wenige Zahlenwerte pro Bild an den Systemrechner übermittelt werden.

Bei der Auswertung der Geradheit im Systemrechner wird zunächst eine Ausgleichsgerade über alle Werte berechnet und eine Ideallinie in die horizontale Bildschirmachse entlang der Meßprofilachse projiziert. Davon ausgehend lassen sich Abweichungen des Profilverlaufs in einem vorgewählten Toleranzrahmen ohne weiteres ermitteln und weiterverarbeiten oder über die DV-Peripherie ausgeben.

Die Dicke des Meßprofils 3 ergibt sich unmittelbar aus den von den optischen Abstandssensoren 18,19 ermittelten Werten. Durch Messung einer anderen Höhe während der Rückfahrt läßt sich die Parallelität der Stegseiten des Meßprofils 3 aus den Werten der Abstandssensoren unmittelbar bestimmen und bewerten.

Durch exakte Erfassung von Profilanfang und -ende mittels der schnellen Abstandssensoren 18,19 läßt sich mit Hilfe eines hochauflösenden Inkrementalgebers die Länge des Profils bestimmen.

Die Vorrichtung ist daher sowohl für den Handbetrieb als auch für die halb- und vollautomatische Messung von Langkörpern einsetzbar und liefert exakte schnellverwertbare Meßergebnisse bei minimalem Konstruktionsaufwand.

## Patentansprüche

1. Verfahren zum Messen der Dicke oder Parallelität oder Länge oder Geradheit oder Rauheit von auf einem Rollgang (2a) aufliegenden Langkörpern (3) mit einem entlang einer Fahrbahn (6) verfahrbaren Messkopf (14), bei dem
- die Kalibrierung des Messsystems an einem Laserstrahl durchgeführt wird, der längs der Fahrbahn (6) des Messkopfes (4) verläuft,
- die einzelnen Messpunkte des Langkörpers (3) über in dem Messkopf (4) befindliche optische Sensoren (15, 18, 19) erfasst werden,
- der Messkopf (4) mit den Sensoren (15, 18, 19) bei der Messung relativ zum Längskörper (3) bewegt wird und
- die von den Sensoren (15, 18, 19) erfassten Daten an einen Rechner übermittelt und der daraus die geometrischen Eigenschaften des Langkörpers (3) errechnet oder rechnerisch in Relation zu einer Bezugsgröße gesetzt werden, um Sollabweichungen festzustellen.

2. Verfahren nach Anspruch 1, **dadurch gekennzeichnet, dass** der auf dem Rollgang (2a) aufliegende Langkörper (3) **dadurch** entspannt wird, dass er in mindestens einem Punkt angehoben und zentriert in die gewünschte Position bewegt wird.

3. Verfahren nach einem der Ansprüche 1 oder 2, **dadurch gekennzeichnet, dass** die einzelnen Messpunkte mittels Sensoren (15,18,19)erfasst werden, die in jeder der dem Langkörper (3) zugewandten Seite des Messkopfes (4) angeordnet sind.

4. Verfahren nach einem der Ansprüche 1 bis 3, **dadurch gekennzeichnet, dass** ein aus einer Doppelplattenkonstruktion bestehender Messkopf entlang der Fahrbahn verfahren wird.

5. Verfahren nach einem der Ansprüche 1 bis 4, **dadurch gekennzeichnet, dass** ein den Langkörper (3) umgreifender Messkopf entlang der Fahrbahn verfahren wird.

6. Verfahren nach einem oder mehreren der Ansprüche 1 bis 5, **dadurch gekennzeichnet, dass** die Sensoren des Messkopfs (4) in der Vertikalen verfahren werden.

7. Verfahren nach einem oder mehreren der Ansprüche 1 bis 6, **dadurch gekennzeichnet, dass** mindestens ein Messpunkt mittels eines Lichtschnittsensors (15) erfasst wird.

8. Verfahren nach einem oder mehreren der Ansprüche 1 bis 7, **dadurch gekennzeichnet, dass** mindestens ein Messpunkt mittels eines Abstandssensors (18) erfasst wird.

9. Verfahren nach Anspruch 7 und 8, **dadurch gekennzeichnet, dass** die Lichtschnittsensoren (15) in der Vertikalen und die Abstandssensoren (18) in der Horizontalen Messpunkte erfassen.

10. Verfahren nach Anspruch 8 oder 9, **dadurch gekennzeichnet, dass** die Abstandssensoren (18) Messpunkte über eine CCD-Zeile erfassen, die längs zum Langkörper (3) angeordnet ist.

11. Verfahren nach einem der Ansprüche 7 bis 10, **dadurch gekennzeichnet, dass** die Lichtschnittsensoren (15) Messpunkte über eine kurzzeitbelichtete CCD-Kamera mit Beleuchtung und Rasterlinse erfassen.

12. Verfahren nach einem oder mehreren der Ansprüche 1 bis 11, **dadurch gekennzeichnet, dass** das Verfahren des Messkopfes (4) und der Sensoren (15, 18, 19) mit Hilfe von SPS-Subsystemen erfolgt.

## Claims

1. Method for measuring the thickness or parallellity or length or straightness or roughness of longitudinal bodies (3) lying on a roller train (2a) with a measuring head (14) capable being moved along a track (6) in which
- the calibration of the measuring system is carried out on a laser beam, which runs along the track (6) of the measuring head (4),
- the individual measuring points of the longitudinal body (3) are detected by means of optical sensors (15, 18, 19) located in the measuring head (4),
- the measuring head (4) is moved with the sensors (15, 18, 19) relative to the longitudinal body (3) during the measurement, and
- the data captured by the sensors (15, 81, 19) is transferred to a computer, and from this the geometric properties of the longitudinal body (3) are calculated or set by calculation in relation to a reference value, in order to determine reference deviations.

2. Method according to Claim 1, **characterised in that** the longitudinal body (3) lying on the roller train (2a) is relaxed in such a way that it is raised at at least one point and moved centred into the desired position.

3. Method according to either of Claims 1 or 2, **characterised in that** the individual measuring points are detected by means of sensors (15, 18, 19), which are arranged on each side of the measuring head (4) facing the longitudinal body (3).

4. Method according to any one of Claims 1 to 3. **characterised in that** a measuring head having a double plate construction is moved along the track.

5. Method according to any one of Claims 1 to 4, **characterised in that** a measuring head encompassing the longitudinal body (3) is moved along the track.

6. Method according to one or more of Claims 1 to 5, **characterised in that** the sensors of the measuring head (4) are moved in the vertical direction.

7. Method according to one or more of Claims 1 to 6, **characterised in that** at least one measuring point is detected by means of a light section sensor (15).

8. Method according to one or more of Claims 1 to 7, **characterised in that** at least one measuring point is detected by means of a distance sensor (18).

9. Method according to Claim 7 or 8, **characterised in that** the light section sensors (15) detect measuring points in the vertical direction and the distance sensors (18) in the horizontal direction.

10. Method according to Claim 8 or 9, **characterised in that** the distance sensors (18) detect measuring points by means of a CCD line, which is arranged longitudinally to the longitudinal body (3).

11. Method according to any one of Claims 7 to 10, **characterised in that** the light section sensors (15) detect measuring points by means of a short-time exposure CCD camera with lighting and grid lenses.

12. Method according to one or more of Claims 1 to 11, **characterised in that** the movement of the measuring head (4) and the sensors (15, 18, 19) is effected with the aid of memory-programmable subsystems.

## Revendications

1. Procédé de mesure de l'épaisseur ou du parallélisme ou de la longueur ou de la rectitude ou de la rugosité de corps longs (3) reposant sur une ligne de rouleaux (2a) avec une tête de mesure (4) déplaçable le long d'un chemin de roulement (6), selon lequel
- le calibrage du système de mesure est effectué sur un rayon laser qui s'étend le long du chemin de roulement (6) de la tête de mesure (4),
- les différents points de mesure du corps long (3) sont saisis au moyen de capteurs optiques (15, 18, 19) situés dans la tête de mesure (4),
- la tête de mesure (4) avec les capteurs (15, 18. 19) est déplacée par rapport au corps long (3) lors de la mesure et
- les données saisies par les capteurs (15, 18. 19) sont transmises à un calculateur et, à partir de celles-ci, les caractéristiques géométriques du corps long (3) sont calculées ou mises en relation par le calcul avec une grandeur de référence pour détecter des écarts par rapport à la consigne.

2. Procédé selon la revendication 1, **caractérisé par le fait que** le corps long (3) reposant sur la ligne de rouleaux (2a) est détendu **par le fait qu'**il est soulevé en au moins un point et déplacé de manière à être centré dans la position souhaitée.

3. Procédé selon l'une des revendications 1 ou 2, **caractérisé par le fait que** les différents points de mesure sont saisis au moyen de capteurs (15, 18, 19) qui sont disposés sur chacun de côtés de la tête de mesure (4) tournés vers le corps long (3).

4. Procède selon l'une des revendications! à 3, **caractérisé par le fait qu'**une tête de mesure constituée d'une construction à double plaque est déplacée le long du chemin de roulement.

5. Procédé selon des revendications 1 à 4, **caractérisé par le fait qu'**une tête de mesure enveloppant le corps long (3) est déplacée le long du chemin de roulement.

6. Procédé selon l'une ou plusieurs des revendications 1 à 5, **caractérisé par le fait que** les capteurs de la tête de mesure (4) sont déplacés sur la verticale.

7. Procédé selon l'une ou plusieurs des revendications 1 à 6, **caractérisé par le fait qu'**au moins un point de mesure est saisi au moyen d'un capteur de profil (15).

8. Procédé selon l'une ou plusieurs des revendications 1 à 7, **caractérisé par le fait qu'**au moins un point de mesure est saisi au moyen d'un capteur de distance (18).

9. Procédé selon les revendications 7 et 8, **caractérisé par le fait que** les capteurs de profil (15) saisissent des points de mesure sur la verticale et les capteurs de distance (18) sur l'horizontale.

10. Procédé selon la revendication ou 9, **caractérisé par le fait que** les capteurs de distance (18) saisissent des points de mesure au moyen d'une barrette d'éléments CCD qui est disposée le long du corps long (3).

11. Procédé selon l'une ou plusieurs des revendications 7 à 10, **caractérisé par le fait que** les capteurs de profil (15) saisissent des points de mesure au moyen d'une caméra CCD à exposition de courte durée avec éclairage et lentille de balayage.

12. Procédé selon l'une ou plusieurs des revendications 1 à 11, **caractérisé par le fait que** le déplacement de la tête de mesure (4) et des capteurs (15, 18, 19) est réalisé à l'aide de sous-systèmes d'automate programmable.
